# EUROPEAN PATENT APPLICATION

(11) **EP 2 037 380 A1**
(43) Date of publication of application: **18.03.2009**
(21) Application number: 08164311.6
(22) Date of filing: 12.09.2008
(51) Int. Cl.: G06F 17/30, G06Q 10/00

(54) **Method and system for sharing information between disparate data sources in a network**

(30) Priority: 17.09.2007 US 856529
(71) Applicant: Honeywell International Inc., Morristown, NJ 07962 (US)
(72) Inventor: Buster, Duke, Albuquerque, NM 87122 (US)
(74) Representative: Buckley, Guy Julian

(57) **Abstract**

A system and method for sharing information in a network are provided. The system comprises a database module operative to maintain an information database identifying one or more items-of-interest. One or more data source communication modules are operatively connected to the database module. The one or more data source communication modules are configured to transmit one or more items-of-interest to the information database, or listen for one or more items-of-interest in the information database. A situation display module is operatively connected to the database module. The situation display module is configured to transmit one or more items-of-interest to the information database, or listen for one or more items-of-interest in the information database.

## Description

### RELATED APPLICATIONS

This application is related to commonly assigned U.S. Patent Application Serial No. 11/856,532 (Honeywell Docket No. H0016959), filed on even date herewith, and which is incorporated herein by reference.

### BACKGROUND

A user of informational data such as a soldier or civilian in the field needs a single coherent picture of his or her situation. The user needs data from maps, nearby sensor assets, message networks, and automated support functions. However, content, format and update rates of such data is different between sources.

Informational data is available in many different forms, such as sensor telemetry, detector data, photos, videos, digital messages, and map data. Nevertheless, soldiers or civilians in the field do not currently have a single, easy access point to situation awareness information, and no single point of control over assets and messaging. In addition, there are no automated support functions to help field users operate all of the assets and messaging functions.

Currently, the user must combine field data in his or her own head, or can utilize custom software that has been written to combine specific data types. Conventional assets and message networks have separate custom interfaces and communications equipment. This forces a field user to carry much equipment.

Some conventional data acquisition systems are hardwired to a fixed set of data types. In such systems, new data types can only be added by changing the existing system architecture. Other systems are hardwired to mix map features (e.g., waypoints, targets, etc.) with UAV/sensor tracks.

There are a number of industry robot control stations that control multiple robots simultaneously. But, these are limited to sensor feeds only, without message networks and automated functions. In addition, there are a number of U.S. Army Command and Control stations in use with planning functions, but these do not combine unmanned assets and wireless network data into a single presentation for a user. Further, current assets and message networks are not easily configured for different missions.

### SUMMARY

The present invention relates to a system and method for sharing information in a network. The system comprises a database module operative to maintain an information database identifying one or more items-of-interest. One or more data source communication modules are operatively connected to the database module. The one or more data source communication modules are configured to transmit one or more items-of-interest to the information database, or listen for one or more items-of-interest in the information database. A situation display module is operatively connected to the database module. The situation display module is configured to transmit one or more items-of-interest to the information database, or listen for one or more items-of-interest in the information database.

### BRIEF DESCRIPTION OF THE DRAWINGS

Features of the present invention will become apparent to those skilled in the art from the following description with reference to the drawings. Understanding that the drawings depict only typical embodiments of the invention and are not therefore to be considered limiting in scope, the invention will be described with additional specificity and detail through the use of the accompanying drawings, in which:
Figure 1 is a functional flow diagram of a computing system for sharing information in a network between disparate software functions;
Figure 2 is a hierarchy diagram showing exemplary groupings of items-of-interest (IOIs) based on common information data to share;
Figure 3 is a schematic diagram showing an exemplary method for using IOIs to share information;
Figures 4A-4C are schematic diagrams illustrating exemplary implementations for using IOIs to share information;
Figure 5 is a block diagram of an exemplary system that can be used to implement sharing of information in a network; and
Figure 6 is a block diagram of an IOI database module and its interaction with other modules used in the system of claim 5.

### DETAILED DESCRIPTION

In the following detailed description, embodiments are described in sufficient detail to enable those skilled in the art to practice the invention. It is to be understood that other embodiments may be utilized without departing from the scope of the present invention. The following detailed description is, therefore, not to be taken in a limiting sense.

The present invention generally provides a method and system for sharing information between disparate data sources having different software functions. The present method and system utilize a software architecture in which a hierarchy of items-of-interest (IOIs) are maintained to provide a single coherent situation picture to a field user. The method and system provide techniques for discovering IOIs and handling IOI updates. The method and system can also be used to control assets in the field, send data over message networks, and provide automated behaviors to reduce user workload.

Exemplary field assets that generate data include small unmanned aerial vehicles (UAVs) such as miniature air vehicles (MAVs) and organic air vehicles (OAVs), unmanned ground vehicles (UGAs), security cameras, personnel trackers, personnel navigation systems, vehicle health sensors, unattended ground sensors (UGS), and the like.

In one aspect, the present method provides the components of a command and control system with a way to discover important or relevant data. A shared location is utilized to post IOIs with enough information that the components of the system can decide if one or more of the items are important. If the one or more items are important, a component can go to the data source for more information. In one implementation, the present method can be utilized as part of the software package for a network system, such as the network-enabled operator station (NEOS), which is being developed by Honeywell.

Unlike conventional techniques, the present invention provides an architecture that is not hardwired to a fixed set of data types. In addition, new data types can be added without changing the existing system, and the IOIs permit large systems where functions can be added or removed without changing information sharing protocols. Further, data can be exchanged between functions without direct user action, which reduces the burden on the user. The IOIs gives the user a unique way of inserting data, and information with different levels of security can be segregated.

As used herein, an "item-of-interest" (IOI) is a public synopsis or summary of interesting and useful information. In general the present system can be used to summarize information in the form of an IOI, post the IOI, and alert other users of the IOI. All IOIs are available through a single, common information distribution method such that any software function can create and post an IOI, any software function can listen for IOIs being added or removed, and any software function can listen for changes in an IOI. The software functions all share data from the same location, and the data is summarized into a common, shareable format in the form of an IOI.

Further details of the present invention are described hereafter with respect to the drawings.

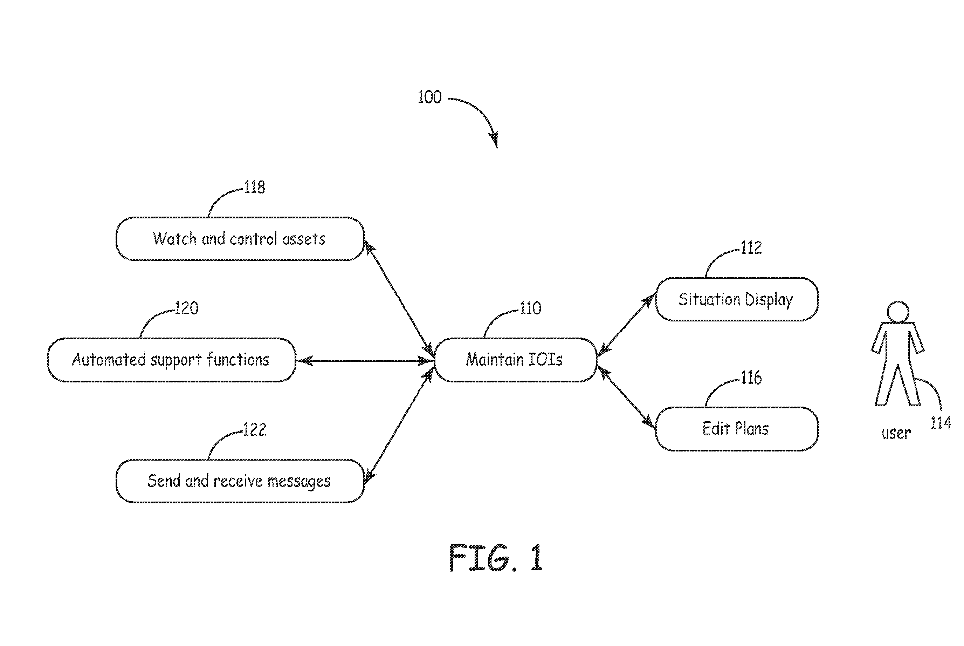

Figure 1 depicts a functional flow diagram of a computing system 100 for sharing information in a network between disparate software functions by using IOIs. The system 100 includes a database module 110 that is operative to maintain an information database identifying one or more IOIs. The database module 110 acts as an information broker and provides a "melting pot" for information from various data sources. The IOIs can be used to display information to the user, and allow the user to tailor a display screen to show the information that is needed.

A situation display module 112 is operatively connected to database module 110. The situation display module 112 is configured to transmit one or more IOIs to the information database or listen for one or more IOIs in the information database. The situation display module 112 provides a display of useful information to a field user 114 such that the user has a single place to understand what is happening in his or her environment.

An edit plans module 116 can also be operatively connected to database module 110, and is configured to post one or more IOIs to the information database or listen for on or more IOIs in the information database. The edit plans module 116 provides tools and interfaces allowing the user to change one or more plans running on the network.

One or more data source communication modules are operatively connected to database module 110. The data source communication modules can include a watch and control assets module 118, an automated support functions module 120, and a send and receive messages module 122, which provide the ability to communicate with different sources of data. The data source communication modules are configured to transmit one or more IOIs to the information database or listen for one or more IOIs in the information database.

During operation of system 100, if a network component such as a field asset has some data that could be interesting or useful to the rest of the network, the component creates and maintains an IOI and posts it on a shared blackboard in database module 110. The "blackboard" is a conventional software object that provides a way to share information with all other users in the network by providing a shared repository of IOIs, which can be thought of as a dynamic "library" of information contributions recently "published" by information sources such as IOI owners. Other components in the network can sign up to listen to the shared blackboard to find out what IOIs are available. Listener components get notified when an IOI is added, changed, or deleted, and the listener components can respond by taking action. The network has a single shared blackboard for the IOIs, allowing every network component to get access to every IOI.

The IOIs are organized into a hierarchy of simple logical groups. This makes it easier for other software functions to filter out items that are not interesting, and to get common information that is desired such as position. Exemplary IOIs include waypoint, route, target, point symbol, area symbol, symbol laydown, corridor/zone (e.g., no-fly zone), friendly location or track, entity track, unit, asset (e.g., UAV), asset detection, sensor detection, event (e.g., deadline), assignment, schedule, action, threat (e.g., mine), terrain feature (e.g., bridge), storm, snow cover, etc. Network components use such IOIs to "discover" data of interest for the user.

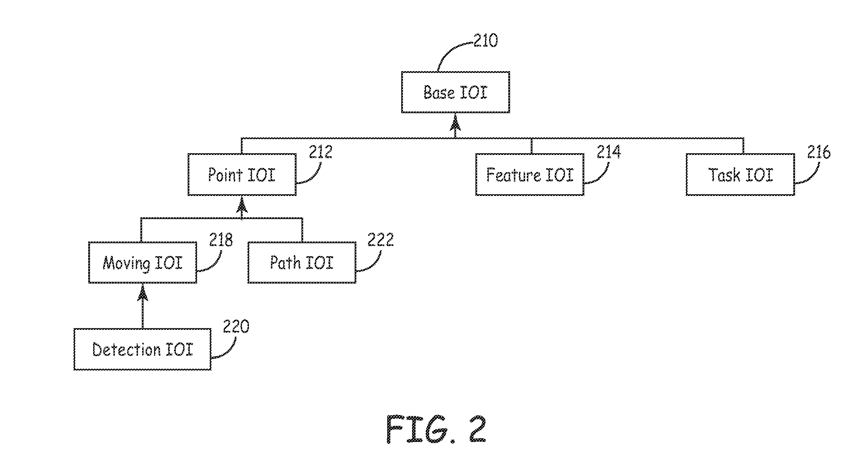

Figure 2 is a hierarchy diagram showing exemplary category groupings of IOI types based on common information data to share. These groupings can be used for user editing functions such as provided in the edit plans module 116 of Figure 1. Exemplary user editing functions include control measures, free-hand map overlays, route, schedule, status, terrain feature, and unit. Other IOI types can be added for internal use such as an entity IOI for an individual person, asset, or vehicle; a waypoint IOI; or a task IOI that represents one task in a schedule.

In the diagram of Figure 2, a base IOI group 210 has data attribute information that all IOIs share, such as user comments, last update time, name, and source object. The base IOI group 210 is further broken down into a point IOI group 212, a feature IOI group 214, and a task IOI group 216. The point IOI group 212 has information that some of the IOIs share, such as orientation, start time, end time, and location. The point IOI group 212 is further broken down into a moving IOI group 218 having a detection IOI sub-group 220, and a path IOI group 222. The moving IOI group 218 has information that some of the IOIs share, such as trail (history), and velocity. The result of grouping IOIs by common data attributes is that every software function can discover basic information about an item.

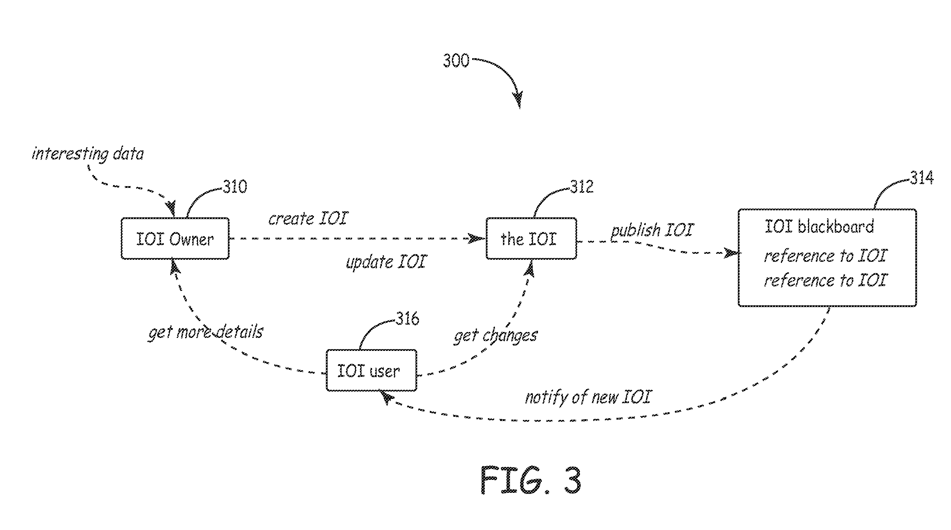

Figure 3 is a schematic diagram showing an exemplary method 300 for using IOIs to share information. Initially, an IOI owner 310 (*i.e*., software function) has data that could be of interest to other software functions. The IOI owner 310 creates a public synopsis of the data in the form of a new IOI 312 and publishes IOI 312 on an IOI blackboard 314. The blackboard 314 keeps a list of IOIs including references to the IOIs. The blackboard 314 notifies a subscribed IOI user 316 that new IOI 312 has been posted. The user 316 asks the blackboard 314 for information about the new IOI such has who is the owner. The user 316 can then communicate with owner 310 to get further details related to IOI 312 if the IOI is of interest. The owner 310 can update the IOI if any information changes, and the user 316 can also listen to IOI 312 for any changes. Other software functions listening to IOI 312 are also notified of any changes.

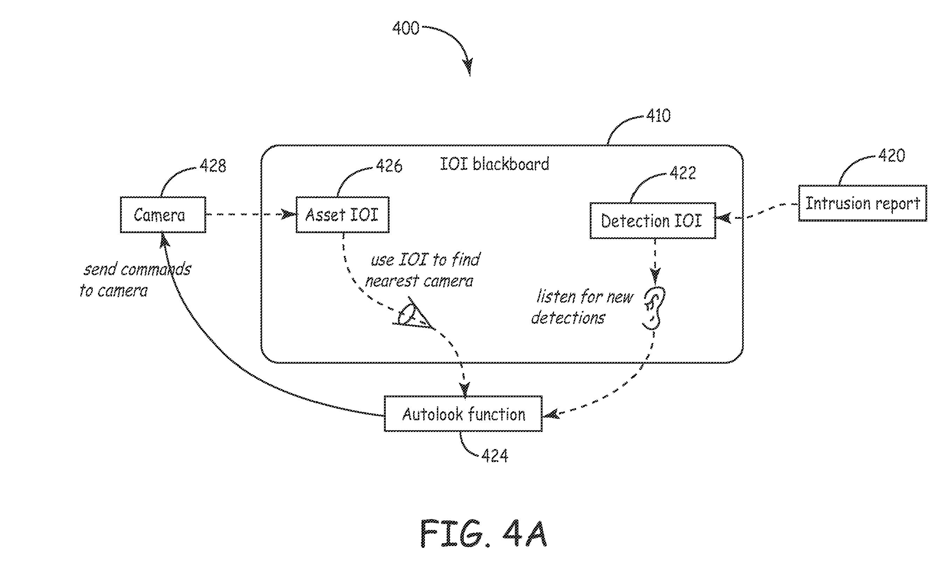

Figures 4A-4C are schematic diagrams illustrating exemplary implementations for using IOIs to share information. Figure 4A depicts an implementation 400 using an IOI blackboard 410 in which an automated function points the nearest camera at a reported intruder. Initially, an intrusion report message 420 arrives at a message handler which posts a corresponding detection IOI 422 on blackboard 410. An autolook function module 424 listening for new detection IOIs is notified of detection IOI 422. The autolook function module 424 obtains the location of intrusion from the IOI summary information. The autolook function module uses an asset IOI 426 to find the closest available camera 428, and sends commands to the camera to look at the intruder location.

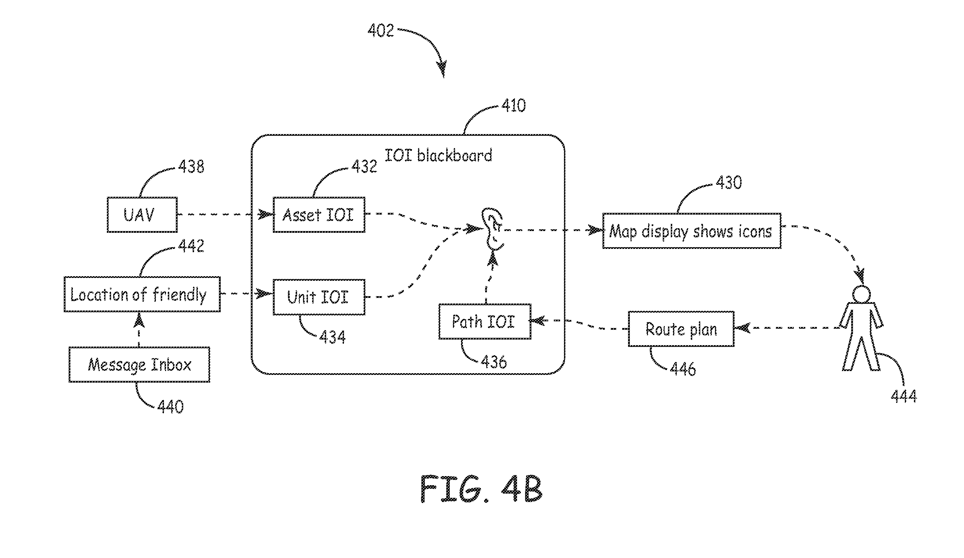

Figure 4B depicts an implementation 402 using IOI blackboard 410 in which a user builds a route plan on a map. Initially, a map display module 430 listens for all assets, friendly units, and routes by using an asset IOI 432, a unit IOI 434, and a path IOI 436. The asset IOI 432 can be generated by a UAV 438. A message inbox 440 can receive a location of friendly message 442, which can be used to generate unit IOI 434. The map display module 430 draws an icon for each item based on its IOI category and shows the icons on a map to a user 444. The user creates a route plan 446 and picks waypoints on the displayed map. As the user creates route plan 446, a route IOI with waypoints is created and the map display module 430 draws the route.

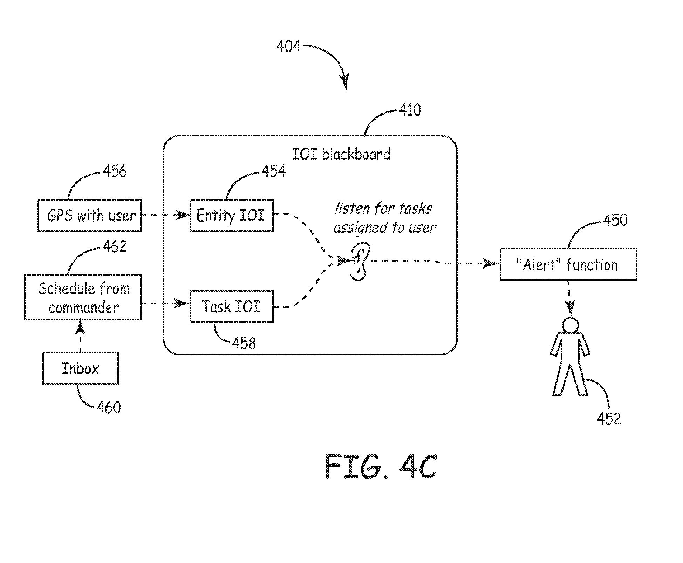

Figure 4C depicts an implementation 404 using IOI blackboard 410 in which an automated function alerts a user when a new task has arrived. Initially, an alert function module 450 listens for the location of a user 452 by using an entity IOI 454, which can be generated by a global positioning system (GPS) 456 with the user. The alert function module 450 also listens for new schedules and tasks for the user from a task IOI 458. An inbox 460 can receive a schedule 462 such as from a commander, which can be used to generate task IOI 458. The alert function module 450 looks inside the schedule for a task assigned to the user. When a new task for the user has arrived, the user receives an alert signal from alert function module 450. For example, if the user needs to arrive at a prescribed destination by a certain time, an alert signal can be given to the user indicating the arrival of the new task.

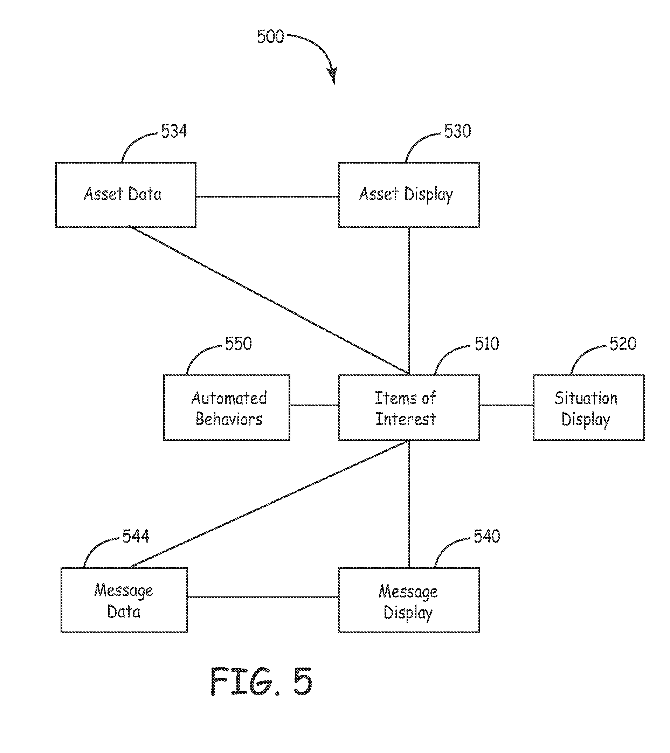

Figure 5 is a block diagram of an exemplary information fusion system 500 that can be utilized to implement the sharing of information in a network using the present IOI architecture. The data used in system 500 stays the same, regardless of user display style. The system 500 also provides good encapsulation for software changes. The system 500 can be implemented on a computer platform such as a workstation or laptop computer, a tablet computer, a personal digital assistant (PDA), or the like. The computer platform 510 can be ruggedized for the field by use of padding, a magnetic stylus, long-life batteries, etc. The computer platform can have a standard operating system that supports the data fusion functions of system 500, such as windowing, security, soft real-time, and the like.

The system 500 includes a database module 510 operative to maintain an information database identifying one or more items-of-interest. A situation display module 520 is in operative communication with database module 510. An asset display module 530 is in operative communication with database module 510. An asset data module 534 is in operative communication with asset display module 530 and with database module 510. The asset display module 530 and asset data module 534 can be part of the overall watch and control assets module 118 shown in Figure 1.

Additionally, system 500 includes a message display module 540, which is in operative communication with database module 510. A message data module 544 is in operative communication with message display module 540 and with database module 510. The message display module 540 and message data module 544 can be part of the overall send and receive messages module 122 of Figure 1. An automated behaviors module 550 is in operative communication with database module 510, and can be part of the overall automated support functions module 120 of Figure 1.

The database module 510 provides a single collection point where all items-of interest can be accessed. As such, database module 550 provides fusion functions that allow items to be passed between assets, networks, and maps, but does not have any functions saying what to do with the IOIs. That is handled by other functional modules in the system. For example, the situation display module 520 has to know what icons to draw for the different types of IOIs.

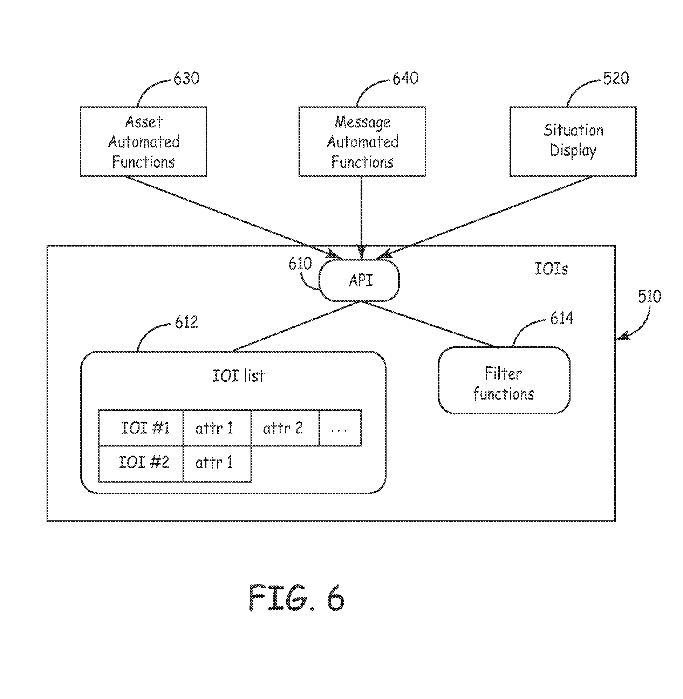

Further details of database module 510 and its interaction with other modules are depicted in the block diagram of Figure 6. The database module 510 includes an application programming interface (API) 610 for the operating system, windowing, and graphics. An IOI list 612 is created in database module 510 on a blackboard, with the list including an arrangement of IOIs and associated data attributes. For example, IOI #1, IOI #2, etc. can be a unique identification, name, source, date/time, location, etc. The data attributes (attr 1, attr 2, etc.) are associated with each IOI by function. A filter functions program 614 is in operative communication with IOI list 612 through API 610. The program 614 filters the list of IOIs by their data attributes.

The database module 510 is in operative communication with an asset automated functions module 630, a message automated functions module 640, and situation display module 520 through API 610. The IOIs can be created by a user, such as targets, rendezvous points, navigation references, etc. The user picks an item from asset data (e.g., video or still photos) or a situation display (e.g., map points) to create an IOI. In addition, assets can be used to create IOIs, such as an asset's position, detections/tracking, etc. Networks can also be used to create IOIs, such as incoming reports, medivac requests, obstacle reports, enemy sightings, and the like.

An exemplary information fusion system similar to system 500 is described in further detail in copending Application Serial No. (Honeywell Docket No. H0016959).

The present system and method can be utilized in a wide range of applications. For example, the system can be utilized in search and rescue operations to establish coverage, monitor danger, locate people, and coordinate rescue. Exemplary field users in such operations can include police and fire departments, the Coast Guard, helicopter para-rescue jumpers, National Parks rescue teams, other rescue teams.

The present system can also be used in commercial and government site security operations. These operations have known fixed sites, sensors, and networks to monitor grounds and personnel, and have teams in place to respond to alerts and unauthorized intruders. Exemplary field users in such operations can include nuclear site and shipment security, municipal and international harbor security, airport security, security for commercial/general aviation overseas, security for corrections officers, corporate grounds security, aircraft anti-tampering security, military base security, and missile silo security.

The present system can also be used in industrial maintenance operations. These operations have sensors amongst equipment, such as for oil and chemical process monitoring, which can alert mobile technicians and provide data to a technician on-the-spot. In addition, the present system can be used by oil refinery security and chemical plant security.

Further, the present system can be utilized in tactical situation awareness, such as for combat during wartime or police operations. Such situations typically have new territory, and loose sensor and network coverage. The system can be used to remotely place sensors and networks, identify threats such as locating hostiles, and coordinate a response to the situation. Exemplary tactical field users can include special weapons and tactic (SWAT) units, Army and Marine squad and platoon command/control and overwatch (e.g., MAVs), special forces troops such as the Navy SEALs and Army Rangers, and the like.

In addition, the present system can be used in monitoring the perimeter of Navy "battle force" ships by small UAVs, as part of the Future Combat Systems (FCS) dismount control device (DCD) for small UAVs, and for counter-improvised explosive device (counter-IED) measures. The present system can also be used by platoon and company commanders to understand and share situations. For example, the system can be employed to reduce fratricide by displaying an overlay of friendlies with selected targets.

The use of IOIs in the present system and method provides many benefits, such as allowing any software function to "discover" data of interest; providing a first level for transforming data into information such as by supporting sensor fusion; and allowing for large systems where functions can be added or removed without changing the information sharing protocols. In addition, completely different functions can share relevant data from many sources using the common location, access, and content/format of IOIs. For example, the method can be applied to automatically send a maintenance team to investigate a refinery sensor alert. In another example, the method can be employed to label a sensor track as a target, and convey this information to a military network.

Instructions for carrying out the various process tasks, calculations, and generation of signals and other data used in the operation of the methods of the invention can be implemented in software, firmware, or other computer readable instructions. These instructions are typically stored on any appropriate computer readable medium used for storage of computer readable instructions or data structures. Such computer readable media can be any available media that can be accessed by a general purpose or special purpose computer or processor, or any programmable logic device.

Suitable computer readable media may comprise, for example, non-volatile memory devices including semiconductor memory devices such as EPROM, EEPROM, or flash memory devices; magnetic disks such as internal hard disks or removable disks; magneto-optical disks; CDs, DVDs, or other optical storage disks; nonvolatile ROM, RAM, and other like media; or any other media that can be used to carry or store desired program code means in the form of computer executable instructions or data structures. Any of the foregoing may be supplemented by, or incorporated in, specially-designed application-specific integrated circuits (ASICs), or field programmable gate arrays (FPGAs). When information is transferred or provided over a network or another communications connection (either hardwired, wireless, or a combination of hardwired or wireless) to a computer, the computer properly views the connection as a computer readable medium. Thus, any such connection is properly termed a computer readable medium. Combinations of the above are also included within the scope of computer readable media.

The method of the invention can be implemented in computer readable instructions, such as program modules or applications, which are executed by a data processor. Generally, program modules or applications include routines, programs, objects, data components, data structures, algorithms, etc. that perform particular tasks or implement particular abstract data types. These represent examples of program code means for executing steps of the methods disclosed herein. The particular sequence of such executable instructions or associated data structures represent examples of corresponding acts for implementing the functions described in such steps.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. A system for sharing information in a network, the system comprising:
a database module operative to maintain an information database identifying one or more items-of-interest;
one or more data source communication modules operatively connected to the database module, the one or more data source communication modules configured to transmit one or more items-of-interest to the information database, or listen for one or more items-of-interest in the information database; and
a situation display module operatively connected to the database module, the situation display module configured to transmit one or more items-of-interest to the information database, or listen for one or more items-of-interest in the information database.

2. The system of claim 1, wherein the database module, the one or more data source communication modules, and the situation display module are implemented in software programs.

3. The system of claim 2, wherein the information database comprises a software blackboard.

4. The system of claim 1, wherein the items-of-interest each comprise a synopsis of information from the one or more data source communication modules.

5. The system of claim 1, wherein the data source communication modules comprise:
a watch and control assets module operatively connected to the database module and configured to post items-of-interest to the information database, or listen for items-of-interest in the information database;
an automated support functions module operatively connected to the database module and configured to post items-of-interest to the information database, or listen for items-of interest in the information database; and
a send and receive messages module operatively connected to the database module and configured to post items-of-interest to the information database or listen for items-of-interest in the information database.

6. The system of claim 5, further comprising an edit plans module operatively connected to the database module and configured to post items-of-interest to the information database, or listen for items-of-interest in the information database.

7. The system of claim 1, wherein the database module maintains the information database such that the items-of-interest are arranged in a hierarchy based on common data types.

8. A method of sharing information in a network, the method comprising:
maintaining an information database for identifying one or more items-of-interest;
creating one or more items-of-interest from relevant data;
transmitting one or more items-of-interest to the information database; and
listening for one or more items-of-interest in the information database.

9. The method of claim 8, further comprising:
notifying one or more users in the network that one or more items-of-interest are in the information database; and
displaying the one or more items-of-interest to the one or more users.

10. The method of claim 9, further comprising updating the one or more items-of-interest when information related to the one or more items-of-interest changes.
